# EUROPÄISCHE PATENTANMELDUNG

(11) **EP 1 454 800 A1**
(43) Veröffentlichungstag der Anmeldung: **08.09.2004**
(21) Anmeldenummer: 04004063.6
(22) Anmeldetag: 23.02.2004
(51) Int. Cl.: B60R 21/20, B60R 16/00, B60Q 5/00

(54) **Generatorträger für ein Fahrergassackmodul und Funktionsmodul für ein Lenkrad eines Kraftfahrzeugs**

(30) Priorität: 03.03.2003 DE 20303388 U
(71) Anmelder: TRW Automotive Safety Systems GmbH, 63743 Aschaffenburg (DE)
(72) Erfinder: Schütz, Dominik, 63857 Waldaschaff (DE); Rumpf, Dieter, 63322 Rödermark (DE)
(74) Vertreter: Strass, Jürgen

(57) **Zusammenfassung**

Ein Generatorträger (10) für ein Fahrergassackmodul weist eine Außenwand (14) auf. An der Außenwand (14) ist wenigstens eine Einschubkontur (16) zur Anbringung eines Funktionsmoduls (18,20) vorgesehen. Ein Funktionsmodul für ein Lenkrad eines Kraftfahrzeugs weist eine Einsteckkontur (24) zur Befestigung an einem Bauteil des Lenkrads auf.

## Beschreibung

Die Erfindung betrifft einen Generatorträger für ein Fahrergassackmodul, wobei der Generatorträger eine Außenwand aufweist, und ein Funktionsmodul für ein Lenkrad eines Kraftfahrzeugs. Die Erfindung betrifft ferner eine Baugruppe aus einem Generatorträger und einem Funktionsmodul sowie ein Lenkrad für ein Kraftfahrzeug.

Gasgeneratorträger sind Blech- oder Kunststoffteile, die sozusagen die Brücke zwischen dem Gasgenerator eines Gassackmoduls und dem Lenkradskelett bilden. Der Gasgenerator ist üblicherweise unmittelbar am Gasgeneratorträger montiert, und dieser ist direkt oder indirekt mit dem Lenkradskelett verbunden.

Moderne Lenkräder werden zunehmend auch mit Schaltern, z.B. zur Bedienung einer Audioanlage, eines Autotelefons oder eines Bordcomputers, und mit Elektronikmodulen ausgestattet, in denen z.B. elektrische Schaltungen zur Signalverarbeitung untergebracht sind. Die Schalter sind in Schaltermodulen angeordnet, die ebenso wie die Elektronikmodule als separate Komponenten über Zwischenbleche oder dergleichen am Lenkradskelett befestigt sind, was die Montage aufwendig und eine genaue Positionierung relativ zu anderen angrenzenden Bauteilen, insbesondere zum Generatorträger erschwert.

Aufgabe der Erfindung ist es, die Montage der Schalter- und Elektronikmodule zu vereinfachen und den Austausch dieser Funktionsmodule zu erleichtern.

Die Erfindung sieht hierzu bei einem Generatorträger der eingangs genannten Art vor, daß an der Außenwand wenigstens eine Einschubkontur zur Anbringung eines Funktionsmoduls vorgesehen ist. Der erfindungsgemäße Generatorträger ermöglicht somit ein einfaches Anstecken eines oder mehrerer Funktionsmodule bei definiert vorgegebener Einbaulage der Module. Dadurch wird eine Verbesserung der Positionsgenauigkeit der Funktionsmodule am Generatorträger und relativ zu angrenzenden Bauteilen des Lenkrads wie der Abdeckkappe des Gassackmoduls, den Lenkradspeichen etc. erreicht. Außerdem vereinfacht sich insgesamt der Zusammenbau des Lenkrads, wobei die erfindungsgemäße Ausbildung des Generatorträgers die Möglichkeit eröffnet, den Generatorträger und die Funktionsmodule zu einer vormontierten Baueinheit zusammenzufassen. Zusätzliche Montageteile für die Funktionsmodule können entfallen, so daß sich die Anzahl der Bauteile verringert und der im Lenkrad zur Verfügung stehende Bauraum besser ausgenutzt werden kann.

Die Aufgabe der Erfindung wird auch durch ein Funktionsmodul für ein Lenkrad eines Kraftfahrzeugs gelöst, das eine Einsteckkontur zur Befestigung an einem Bauteil des Lenkrads aufweist. Die Einsteckkontur ermöglicht eine einfache und positionsgenaue Anbringung des Funktionsmoduls am Lenkrad.

Die Erfindung sieht ferner eine Baugruppe aus einem erfindungsgemäßen Generatorträger und einem erfindungsgemäßen Funktionsmodul vor. Als besonders vorteilhaft erweist sich eine Ausführungsform der erfindungsgemäßen Baugruppe, bei der im Inneren des Generatorträgers ein Kabelstrang verlegt ist, der in den Bereich der Einschubkontur geführt ist und ein Ende des Kabelstrangs abisoliert und im Bereich der Einschubkontur befestigt ist, und bei der eine Kontaktleitung des Funktionsmoduls in den Bereich der Einsteckkontur geführt ist und ein Ende der Kontaktleitung abisoliert und im Bereich der Einsteckkontur befestigt ist. Durch diese Ausgestaltung wird die Verdrahtung des Funktionsmoduls wesentlich vereinfacht, da eine elektrische Verbindung automatisch mit dem Anstecken des Funktionsmoduls hergestellt wird. Zusätzliche Arbeiten zur Kontaktierung sind nicht mehr erforderlich.

Die Erfindung schafft auch ein Lenkrad für ein Kraftfahrzeug mit einer erfindungsgemäßen Baugruppe.

Vorteilhafte Ausgestaltungen der erfindungsgemäßen Anbindung der Funktionsmodule an das Lenkrad sind in den Unteransprüchen angegeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
Figur 1 eine perspektivische Explosionsansicht einer erfindungsgemäßen Baugruppe ohne Verkabelung;
Figur 2 eine perspektivische Ansicht der Baugruppe aus Figur 1 im zusammengebauten Zustand mit Verkabelung nach einer ersten Ausführungsform der Erfindung;
Figur 3 eine schematische Schnittansicht eines erfindungsgemäßen Generatorträgers im Bereich der Außenwand nach einer zweiten Ausführungsform der Erfindung;
Figur 4 eine schematische Schnittansicht eines Schaltermoduls nach der zweiten Ausführungsform der Erfindung; und
Figur 5 eine Schnittansicht des Generatorträgers aus Figur 3 und des Schaltermoduls aus Figur 4 im zusammengebauten Zustand.

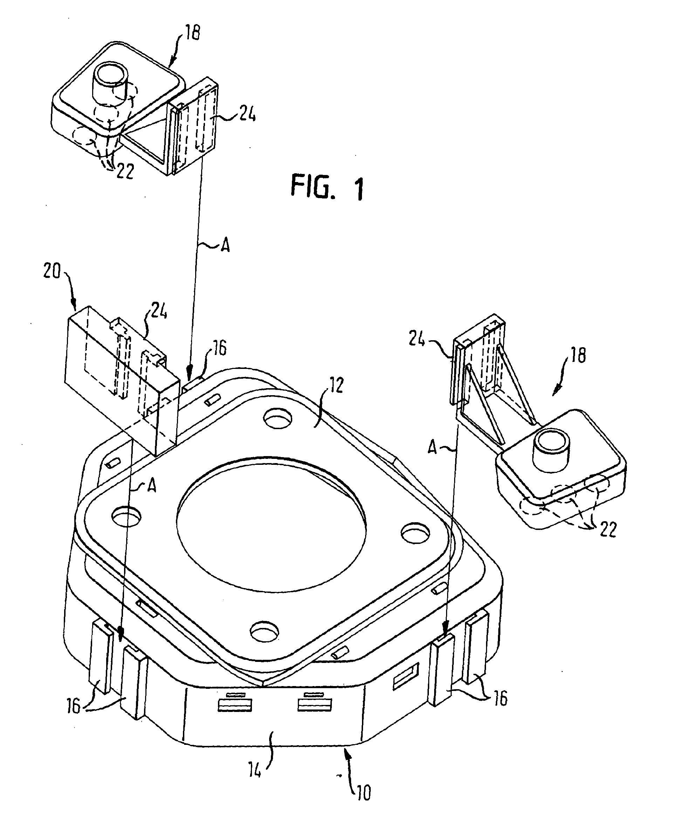

In Figur 1 ist ein Generatorträger für ein Gassackmodul dargestellt, das zum Einbau in ein Lenkrad für ein Kraftfahrzeug bestimmt ist. Auf dem Generatorträger 10, der z.B. aus Kunststoff oder Stahlblech bestehen kann, wird vor dem Einbau in das Gassackmodul ein Gasgenerator zum Befüllen eines Gassacks montiert. Die Figur 1 zeigt, bezogen auf die Sicht des Fahrers auf das im Kraftfahrzeug eingebaute Lenkrad, eine Rückansicht (d.h. die dem Fahrer abgewandte Seite) des Generatorträgers 10. Der Generatorträger 10 ist im wesentlichen topfförmig ausgebildet mit einer Bodenplatte 12 und einer umlaufenden Außenwand 14. An der Außenwand 14 sind außenseitig, bezogen auf die Sicht des Fahrers, an der linken, rechten und unteren Seite Einschubkonturen 16 angeformt.

In Figur 1 sind ferner mehrere Funktionsmodule 18, 20 gezeigt, nämlich zwei Schaltermodule 18 mit Tastschaltern 22 und ein Elektronikmodul 20. Die Funktionsmodule 18, 20 weisen zu den Einschubkonturen 16 passende T-förmige Steckkonturen 24 auf, so daß die Funktionsmodule 18, 20 gemäß den Pfeilen A einfach an den Generatorträger 10 angesteckt werden können. Zur Sicherung der Verbindung zwischen Funktionsmodul und Generatorträger ist jeweils ein geeigneter (nicht dargestellter) Rastmechanismus vorgesehen. Bei der in Figur 1 gezeigten Ausführungsform sind, bezogen auf die Sicht des Fahrers, je ein Schaltermodul 18 am linken und am rechten Rand sowie ein Elektronikmodul 20 am unteren Rand des Generatorträgers 10 vorgesehen; es sind jedoch auch andere Konstellationen möglich.

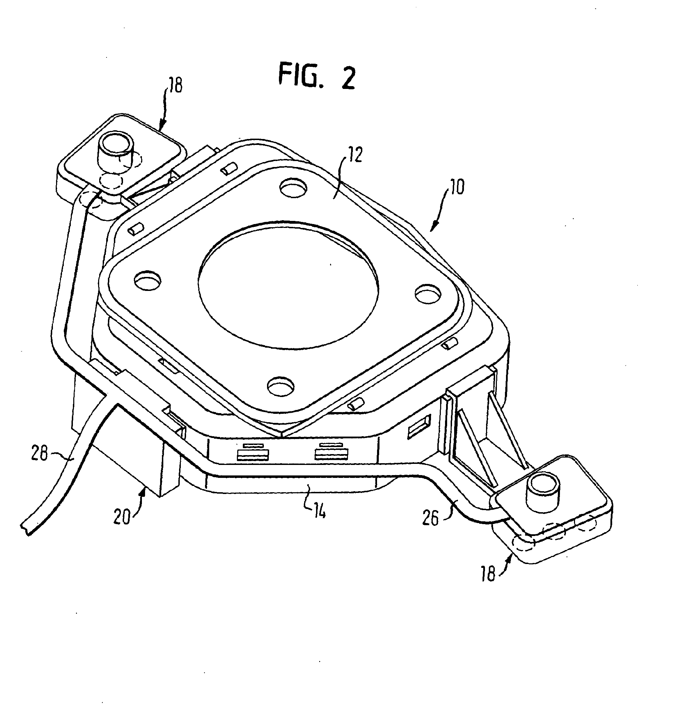

Figur 2 zeigt die Baugruppe aus Generatorträger 10 und Funktionsmodulen 18 im zusammengebauten und verkabelten Zustand. Die Funktionsmodule 18, 20 sind über einen an der Außenwand 14 des Generatorträgers 10 geführten Kabelstrang 26, vorzugsweise ein Flachbandkabel, mit dem Elektronikmodul 20 verbunden. Das Elektronikmodul 20 selbst ist über einen weiteren Kabelstrang 28 z.B. mit einer Einheit zur Steuerung entsprechender Fahrzeugeinrichtungen verbunden.

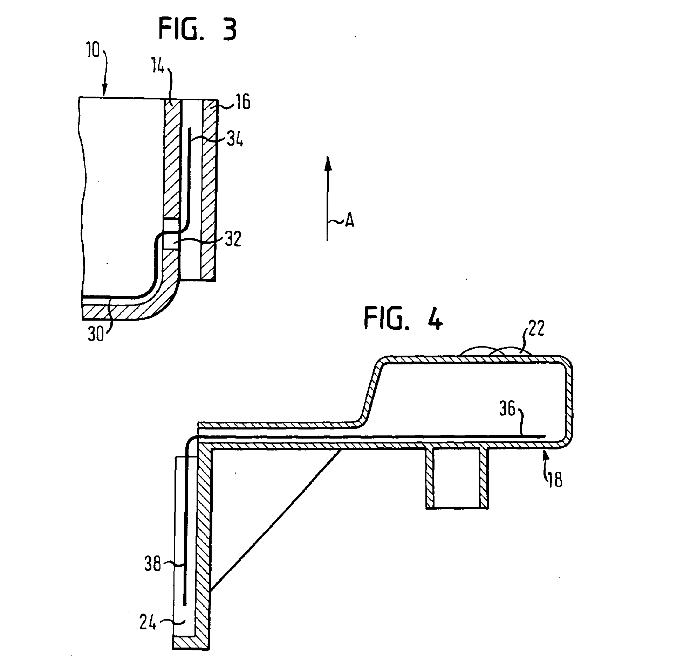

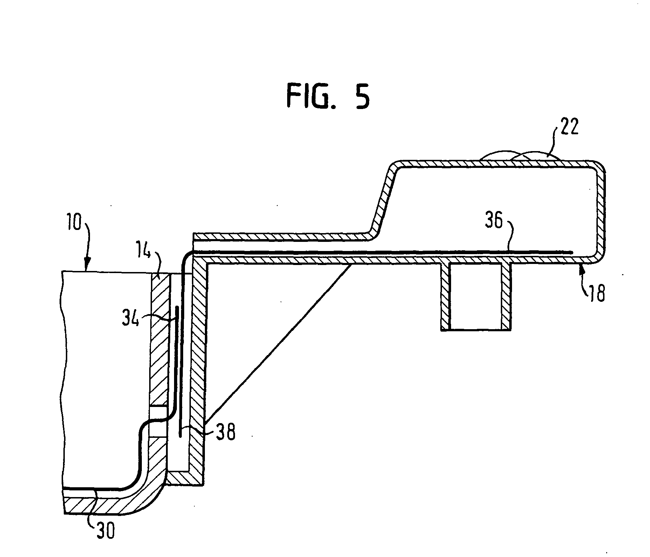

Die Figuren 3 bis 5 beziehen sich auf die in Figur 1 gezeigte Baugruppe, jedoch mit einer anderen Verkabelung als in Figur 2 dargestellt. In Figur 3 ist zu erkennen, daß ein mit der (in den Figuren 3 bis 5 nicht gezeigten) Elektronikeinheit 20 verbundenes Flachbandkabel 30 im Inneren des Generatorträgers 10 verlegt ist. Das Kabel 30 ist durch einen Durchbruch 32 in der Außenwand 14 des Generatorträgers 10 in den Bereich der Einschubkontur 16 geführt, wo das Ende 34 des Kabels 30 befestigt ist. Das Kabel 30 kann aber auch an der Außenwand 14 verlegt und von dort in den Bereich der Einschubkontur 16 geführt sein. In dem in Figur 4 dargestellten Schaltermodul 18 ist eine Kontaktleitung 36 in den Bereich der Steckkontur 24 geführt. Das Ende 38 der Kontaktleitung 36 ist im Bereich der Steckkontur 24 befestigt und ebenso wie das Ende 34 des Kabels 30 abisoliert. Die Enden 34, 38 des Kabels 30 bzw. der Kontaktleitung 36 sind so angeordnet, daß beim Anstecken des Schaltermoduls 18 an den Generatorträger 10 automatisch eine elektrische Verbindung hergestellt wird, ähnlich einer Telefonbuchsen/-stecker-Verbindung. Die elektrische Verbindung des Kabels 30 mit dem Elektronikmodul 20 kann auf dieselbe Weise realisiert werden.

Anstelle der Verwendung von Kabeln und Kontaktleitungen können auch elektrische Bahnen dreidimensional auf den (Kunststoff-)Generatorträger 10 bzw. auf die Gehäuse der Funktionsmodule 18, 20 aufgedampft (gemäß der sog. MID-Technik) und im Bereich der Kontaktstellen abisoliert werden.

Die erfindungsgemäße Anbindung der Funktionsmodule 18, 20 ermöglicht einen einfachen Austausch der Funktionsmodule 18, 20, z.B. bei einem Garantiefall.

## Patentansprüche

1. Generatorträger für ein Fahrergassackmodul, wobei der Generatorträger (10) eine Außenwand (14) aufweist, **dadurch gekennzeichnet, daß** an der Außenwand (14) wenigstens eine Einschubkontur (16) zur Anbringung eines Funktionsmoduls (18, 20) vorgesehen ist.

2. Generatorträger nach Anspruch 1, **dadurch gekennzeichnet, daß** an der Außenwand (14) ein Kabelstrang (26) zur elektrischen Verbindung des Funktionsmoduls (18, 20) geführt ist.

3. Generatorträger nach Anspruch 1, **dadurch gekennzeichnet, daß** im Inneren des Generatorträgers (10) ein Kabelstrang (30) verlegt ist, der in den Bereich der Einschubkontur (16) geführt ist.

4. Generatorträger nach Anspruch 2 oder 3, **dadurch gekennzeichnet, daß** ein Ende des Kabelstrangs (34) abisoliert und im Bereich der Einschubkontur (16) befestigt ist.

5. Funktionsmodul für ein Lenkrad eines Kraftfahrzeugs, **dadurch gekennzeichnet, daß** das Funktionsmodul (18, 20) eine Einsteckkontur (24) zur Befestigung an einem Bauteil des Lenkrads aufweist.

6. Funktionsmodul nach Anspruch 5, **dadurch gekennzeichnet, daß** das Funktionsmodul ein Schaltermodul (18) mit wenigstens einem Schalter (22) zur Bedienung einer Fahrzeugeinrichtung ist.

7. Funktionsmodul nach Anspruch 5, **dadurch gekennzeichnet, daß** das Funktionsmodul ein Elektronikmodul (20) ist.

8. Funktionsmodul nach einem der Ansprüche 5 bis 7, **dadurch gekennzeichnet, daß** eine Kontaktleitung (36) des Funktionsmoduls (18, 20) in den Bereich der Einsteckkontur (24) geführt ist.

9. Funktionsmodul nach Anspruch 8, **dadurch gekennzeichnet, daß** ein Ende (38) der Kontaktleitung (36) abisoliert und im Bereich der Einsteckkontur (24) befestigt ist.

10. Baugruppe aus einem Generatorträger (10) nach einem der Ansprüche 1 bis 4 und einem Funktionsmodul (18, 20) nach einem der Ansprüche 5 bis 9.

11. Baugruppe nach Anspruch 10, **dadurch gekennzeichnet, daß** wenigstens ein Kabelstrang (26; 30) oder eine Kontaktleitung (28) durch dreidimensionales Aufdampfen gebildet ist.

12. Baugruppe nach Anspruch 10 oder 11, **dadurch gekennzeichnet, daß** die Einsteckkontur (24) des Funktionsmoduls (18, 20) in die Einschubkontur (16) des Generatorträgers (10) eingeschoben und die so hergestellte Anbindung des Funktionsmoduls (18, 20) an den Generatorträger (10) mittels eines Rastmechanismus gesichert ist.

13. Lenkrad für ein Kraftfahrzeug, mit einer Baugruppe nach einem der Ansprüche 10 bis 12.
